(19) Europäisches Patentamt
European Patent Office
Office européen des brevets

(11) **EP 4 394 061 A1**

(12) **EUROPEAN PATENT APPLICATION**
published in accordance with Art. 153(4) EPC

(43) Date of publication:
**03.07.2024 Bulletin 2024/27**

(21) Application number: **22861060.6**

(22) Date of filing: **29.07.2022**

(51) International Patent Classification (IPC):
*C22B 5/02* (2006.01)       *C22B 1/02* (2006.01)
*C22B 7/00* (2006.01)       *C22B 15/00* (2006.01)
*C22B 23/02* (2006.01)

(52) Cooperative Patent Classification (CPC):
**C22B 1/02; C22B 5/02; C22B 7/00; C22B 15/00;
C22B 23/02;** Y02P 10/20; Y02W 30/84

(86) International application number:
**PCT/JP2022/029322**

(87) International publication number:
**WO 2023/026769 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.08.2021 JP 2021137251**

(71) Applicant: SUMITOMO METAL MINING CO., LTD.
Tokyo
105-8716 (JP)

(72) Inventors:
• YAMASHITA, Yu
  Niihama-shi, Ehime 792-0002 (JP)
• NAGAKURA, Toshihiko
  Niihama-shi, Ehime 792-0002 (JP)
• HAGIO, Tomoya
  Niihama-shi, Ehime 792-0002 (JP)

(74) Representative: **Jones, Nicholas Andrew**
**Withers & Rogers LLP**
**2 London Bridge**
**London SE1 9RA (GB)**

(54) **METHOD FOR RECOVERING VALUABLE METALS**

(57)     Provided is a method for recovering valuable metals that makes it possible to efficiently recover valuable metals at a high recovery rate. The present invention is a method for recovering the valuable metal from a raw material that contains the valuable metal. This method comprises: a preparation step for preparing a raw material; a melting step for introducing the raw material into a melting furnace and heating and melting the raw material to yield an alloy and a slag; and a slag separation step for separating the slag and recovering a valuable metal-containing alloy. The redox degree is adjusted in the melting step by introducing, as a reducing agent, scrap of a wound body, the wound body being an electrode assembly in which a positive electrode and a negative electrode are wound insulated from each other by a separator and carbon is used in the negative electrode.

## Description

TECHNICAL FIELD

The present invention relates to a method for recovering a valuable metal.

BACKGROUND ART

In recent years, lithium ion batteries have been widespread as lightweight, high-power secondary batteries. Well-known lithium ion batteries have a structure in which a negative electrode material, a positive electrode material, a separator, and an electrolytic solution are enclosed in an outer can.

For example, the outer can is made of a metal such as aluminum (Al) or iron (Fe). The negative electrode material is made of a negative electrode active material (graphite, etc.) bonded to a negative electrode current collector (copper foil, etc.). The positive electrode material is made of a positive electrode active material (lithium nickelate, lithium cobaltate, etc.) bonded to a positive electrode current collector (aluminum foil, etc.). The separator is made of a polypropylene porous resin film, or the like. The electrolytic solution contains an electrolyte such as lithium hexafluorophosphate ($LiPF_6$).

Main applications of lithium ion batteries include hybrid vehicles and electric vehicles. Thus, according to the life cycle of such vehicles, therefore, a huge number of lithium ion batteries, which are now installed in them, are expected to be discarded in the future. Some lithium ion batteries are also discarded if found defective during the manufacturing process. It is desirable to reuse such used batteries and such defective batteries occurring in the manufacturing process (hereinafter such batteries will be referred to as "discarded lithium ion batteries") as a resource.

As a recycling method, a pyrometallurgical smelting process has been proposed, in which all amount of discarded lithium ion batteries are molten in a high-temperature furnace. In the pyrometallurgical smelting process, a crushed discarded lithium-ion battery is molten, and valuable metals to be recovered, such as cobalt (Co), nickel (Ni), and copper (Cu) are separated and recovered from low added-value metals such as iron (Fe) and aluminum (Al), using a difference in oxygen affinity between these metals. In this method, the low added-value metals are oxidized as much as possible so as to be turned into slags, meanwhile valuable metals are recovered as alloys by suppressing their oxidation as much as possible.

In this pyrometallurgical smelting process in which valuable metals are separated and recovered by using a difference in oxygen affinity, it is very important to control the redox degree during the melting treatment. Insufficient control for the redox degree causes impurities in the alloys to be recovered as valuable metals. Otherwise, oxidized valuable metals are incorporated into the slag to be recovered as impurities, resulting in a decreased recovery ratio of valuable metals. Thus, in the pyrometallurgical smelting process, the redox degree is controlled by introducing an oxidizing agent such as air or oxygen or a reducing agent into a melting furnace.

For example, Patent Document 1 proposes a method for recovering cobalt from discarded lithium ion batteries by a dry process, in which discarded lithium ion batteries are fed into a melting furnace and oxidized with oxygen. Patent Document 2 proposes a process including a dephosphorization step, in which, when melting discarded lithium ion batteries, a melting point of a slag is lowered by adding $SiO_2$ and CaO to enhance separation between metals and the slag, to which CaO is added while blowing oxygen into the metals from which the slag has been separated, to remove phosphorus.

Citation List

Patent Document

Patent Document 1: Japanese Patent No. 5818798
Patent Document 2: Japanese Patent No. 5853585

DISCLOSURE OF THE INVENTION

Problems to be Solved by the Invention

Although it has been conventionally proposed to control the redox degree by introducing air or oxygen to the melting process, this method has had a room for improvement. For example, Patent Document 1 describes that cobalt can be recovered at a high recovery ratio but does not describe removal of phosphorus. Thus, it is unclear whether recovery of valuable metals and removal of phosphorus can be stably and efficiently conducted by the process disclosed in this document. The process disclosed in Patent Document 2 requires a separate dephosphorization step and therefore has a problem of increased manufacturing cost.

Conventionally, reducing agents containing carbon atoms (carbonaceous reducing agents) such as coal and coke have been frequently used, but carbonaceous reducing agents have very poor wettability with molten slags and have had a problem of slow reduction reaction. Specifically, there is a problem that, in a melting treatment, a carbonaceous reducing agent added as a reducing agent is repelled from a slag and often ignites on the slag, which makes it difficult to recover valuable metals from the slag.

The present invention has been completed to overcome such conventional problems, and an object of the present invention is to provide a method for recovering a valuable metal, capable of recovering a valuable metal efficiently and at a high recovery ratio.

Means for Solving the Problems

As a result of extensive studies, the inventors have found that the above-described problems can be solved by adjusting a redox degree by feeding, as a reducing agent, a scrap of a wound body of an electrode assembly which is wound with a positive electrode and the negative electrode insulated from each other by a separator and which has a negative electrode formed of carbon, in a heat-melting treatment of sources. This finding has completed the present invention.

(1) A first aspect of the present invention is a method for recovering a valuable metal from sources containing the valuable metal, including: a step of preparing the sources; a step of melting the sources by charging the sources into a melting furnace and heating the sources to obtain an alloy and a slag; and a step of separating the slag to recover the alloy containing the valuable metal, the melting step including adjusting a redox degree by feeding, as a reducing agent, a scrap of a wound body, the wound body being an electrode assembly wound in a state where its positive and negative electrodes are insulated from each other by a separator and having a negative electrode formed of carbon.

(2) A second aspect of the present invention is the method for recovering a valuable metal as described in the first aspect, in which the melting step includes adjusting the redox degree by feeding, as the reducing agent, the scrap of a wound body into a molten product produced after melting the sources by heating.

(3) A third aspect of the present invention is the method for recovering a valuable metal as described in the first or second aspect, in which the melting step includes adding a flux to the sources when the sources are molten by heating.

(4) A fourth aspect of the present invention is the method for recovering a valuable metal as described in any one of the first to third aspects, in which the melting step includes controlling an oxygen partial pressure in the molten product to within a range of $10^{-14}$ atm or higher and $10^{-11}$ atm or lower.

(5) A fifth aspect of the present invention is the method for recovering a valuable metal as described in any one of the first to fourth aspects, further including a step of oxidatively-roasting the sources, and subjecting an oxidatively-roasted material obtained through the oxidative roasting step to the melting step.

(6) A sixth aspect of the present invention is the method for recovering a valuable metal as described in any one of the first to fifth aspects, in which the valuable metal includes at least one metal or alloy selected from a group consisting of copper (Cu), nickel (Ni), cobalt (Co), and combinations thereof.

(7) A seventh aspect of the present invention is the method for recovering a valuable metal as described in any one of the first to sixth aspects, in which the sources include discarded lithium ion batteries.

Effects of the Invention

According to the present invention, a valuable metal can be efficiently recovered at a high recovery ratio from sources containing the valuable metal, such as discarded lithium ion batteries.

BRIEF DESCRIPTION OF THE DRAWINGS

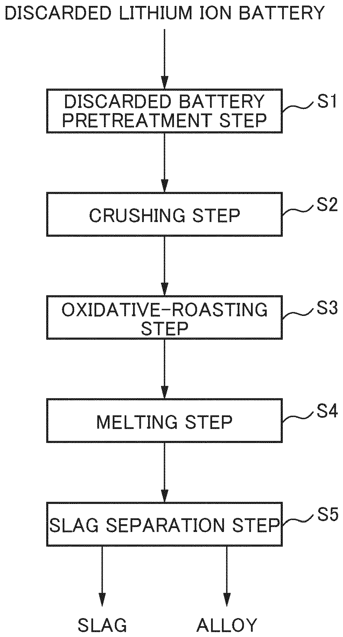

FIG. 1 is a process diagram illustrating an example of a flow of a method for recovering a valuable metal from discarded lithium ion batteries.

PREFERRED MODE FOR CARRYING OUT THE INVENTION

A specific embodiment of the present invention (hereinafter referred to as "the present embodiment") will be explained below. Note that the present invention is not limited to the following embodiment, and can be variously modified unless the gist of the present invention is changed.

<<1. Method for Recovering Valuable Metal>>

In the method for recovering a valuable metal according to the present embodiment, the valuable metal is separated and recovered from sources containing the valuable metal, such as discarded lithium ion batteries.

Specifically, this recovery method includes the following steps: preparing sources containing a valuable metal (preparation step); melting the prepared sources by heating in a melting furnace to obtain an alloy and a slag (melting step); and separating the slag from an obtained molten material to recover the alloy containing the valuable metal (slag separation step). The melting step is characterized in that a redox degree is adjusted by feeding, as a reducing agent, a scrap of a wound body, the wound body being an electrode assembly wound in a state where its positive and negative electrodes are insulated from each other by a separator and having a negative electrode formed of carbon.

Herein, the valuable metal is a subject of recovery and may be, for example, at least one metal or alloy selected from a group consisting of copper (Cu), nickel (Ni), cobalt (Co), and combinations thereof. The sources may also contain phosphorus (P). The method according to the present embodiment is a recovery method mainly including a pyrometallurgical smelting process, but may be a method including a pyrometallurgical smelting process and a hydrometallurgical process.

Each step of this recovery method will be explained below in detail.

[Preparation Step]

In the preparation step, sources containing a valuable metal are prepared. The sources are to be heat-molten in the melting step described below, and to be charged into a melting furnace.

The valuable metal contained in the sources is a subject of recovery as described above, and are e.g. at least one selected from a group consisting of copper (Cu), nickel (Ni), cobalt (Co), and combinations thereof. The sources may also contain these valuable metal components (Cu, Ni, Co, etc.) in a form of metals or elements, or of compounds such as oxides. The sources may also contain other inorganic or organic components other than these valuable metal components (Cu, Ni, Co, etc.).

Objects as the sources are not particularly limited. Examples of the sources include discarded lithium ion batteries, electronic components containing dielectric or magnetic materials, and electronic devices. The form of the sources is not limited either, as long as the sources are suitable for treatment in subsequent steps. In the preparation step, the sources may be processed into a suitable form by pulverization or the like. Furthermore, in the preparation step, the sources may be subjected to heat treatment, sorting, or the like to remove unnecessary components such as moisture and organic matters.

[Oxidative Roasting Step]

Prior to the subsequent treatment in the melting step, if necessary, the sources may be oxidative-roasted (preheated) to prepare an oxidative-roasted material (preheated product) (oxidative roasting step).

In the oxidative roasting step, carbon contained in the sources is decreased by oxidative roasting the sources. This oxidative roasting step makes it possible to effectively oxidize and remove carbon to enhance the alloying and integration of a valuable metal in the subsequent melting step even if the sources contain excessive carbon.

That means, in the heat-melting treatment of the melting step, the valuable metal contained in the sources is reduced into locally molten fine particles, but if the sources contain carbon, carbon may be a physical obstacle when molten fine particles (valuable metals) aggregate. If the aggregation and integration of the molten fine particles are hindered, the separation between the produced alloy and slag may be prevented, resulting in decrease in the recovery ratio of the valuable metal. In contrast, the sources are previously oxidative-roasted to remove carbon in the oxidative roasting step prior to the heat-melting treatment, so that the aggregation and integration of the molten fine particles can be advanced efficiently, and the recovery ratio of the valuable metal can be further increased. Since phosphorus is an impurity element that is relatively prone to reduction, phosphorus is reduced if an excessive amount of carbon is contained in the sources, and therefore phosphorus may be incorporated into the alloy together with the valuable metal. Also in this regard, phosphorus can be prevented from being incorporated into the alloy by previously removing the excessive amount of carbon in the sources by oxidative roasting.

Preferably, the preheated product (oxidative-roasted material) obtained by the preheating has a carbon content of less than 1% by mass.

Also, the preheating step makes it possible to suppress variation in oxidation. In the preheating step, the preheating treatment (oxidative roasting) should be performed at an oxidation degree that allows oxidation of low added-value metals (Al, etc.) contained in the sources to be subjected to the melting step. On the other hand, the oxidation degree can be easily controlled by adjusting the temperature, time, and/or atmosphere for the preheating treatment. Thereby, the oxidation degree can be more strictly adjusted and variations in oxidation can be suppressed in the preheating treatment.

The oxidation degree is adjusted as follows. As described above, aluminum (Al), lithium (Li), carbon (C), manganese (Mn), phosphorus (P), iron (Fe), cobalt (Co), nickel (Ni), and copper (Cu) are generally oxidized in this order. In the preheating step, when the sources contain aluminum (Al), oxidation is advanced until all amount of Al is oxidized. Although oxidation may be enhanced until a portion of iron (Fe) is oxidized, it is preferable to keep the oxidation degree to an extent that cobalt (Co) is not oxidized and distributed into the slag.

The preheating treatment is preferably performed in the presence of an oxidizing agent. Thereby, carbon (C) as an impurity element can be efficiently oxidized and removed. The oxidizing agent is not particularly limited, and is preferably an oxygen-containing gas (air, pure oxygen, oxygen-rich gas, etc.) in terms of handleability. The amount of the oxidizing agent to be introduced is preferably, for example, about 1.2 times a chemical equivalent required for oxidation of each substance to be oxidized.

The preheating temperature is preferably 700°C or higher and 1100°C or lower. If the preheating temperature is 700°C or higher, the oxidation efficiency of carbon can be further increased and the oxidation time can be shortened. If the preheating temperature is 1100°C or lower, the thermal energy cost can be decreased and the preheating efficiency can be increased. The preheating temperature may be 800°C or higher, or 900°C or lower.

The preheating treatment can be performed using a known roasting furnace. It is preferable that the preheating treatment is performed in a furnace (spare furnace) different from the melting furnace for the treatment in the subsequent melting step. As the preheating furnace, any type of furnace can be used as long as oxidation treatment can be performed in the furnace by feeding an oxidizing agent (such as oxygen) while roasting the sources to be treated. Examples of the preheating furnace include conventionally known rotary kilns, tunnel kilns (hearth furnaces), and fluidized roaster.

[Melting Step]

In the melting step, the sources prepared in the preparation step (e.g. sources including discarded lithium ion batteries), or oxidative-roasted materials obtained by oxidative-roasting the sources are charged into the melting furnace, then heat-molten (reduction melting treatment), and separated into an alloy (metal) and a slag.

Specifically, in the melting step, the sources are heat-molten to prepare a molten product. This molten product contains an alloy and a slag in a molten state. Then, the obtained molten product is used as a molten material. This molten material contains the alloy and the slag in a solidified state. Main components of the alloy are a valuable metal. Thus, the valuable metal and other components can be separated into the alloy and the slag respectively.

This is because low added-value metals (e.g. Al) have high oxygen affinity, whereas the valuable metal has low oxygen affinity. For example, aluminum (Al), lithium (Li), carbon (C), manganese (Mn), phosphorus (P), iron (Fe), cobalt (Co), nickel (Ni), and copper (Cu) are generally oxidized in this order. In other words, aluminum (Al) is most easily oxidized and copper (Cu) is most hardly oxidized. Thus, low added-value metals (Al, etc.) are easily oxidized into a slag, meanwhile the valuable metal (Cu, Ni, Co, etc.) is reduced into a metal (alloy). In this way, the valuable metal and low added-value metals can be efficiently separated into the alloy and the slag respectively.

In the melting step, the sources are first heat-molten to prepare a molten product, to which a reducing agent or an oxidizing agent is added to control a redox degree of the molten product. In this step, the redox degree is controlled by using a scrap of a wound body as a reducing agent in the method according to the present embodiment.

(Scrap of Wound Body)

The term "wound body" as used herein is a constituent material for the battery and refers to an electrode assembly wound in a state where its positive and negative electrodes are insulated from each other by a separator and having a negative electrode formed of carbon. The term "scrap of wound body" means a scrap maintained at least in a state that carbon constituting the negative electrode is wound with a sheet. The scrap of wound body may be a discarded battery or a defective battery itself detected in a manufacture process. Alternatively, the scrap of wound body may be those merely in a state where carbon obtained by crushing the discarded batteries is wound with a sheet.

As mentioned above, since the scrap of wound body is carbon wound with a sheet, carbon is less likely to come into contact with air, and since the scrap has a specific gravity higher than that of carbon alone, the scrap can also easily penetrate into the slag constituting the molten product, and therefore a reduction efficiency can be improved. Furthermore, copper (Cu), nickel (Ni), and cobalt (Co), which constitute the positive electrode and the like of the wound body, can also be recovered as a valuable metal. Thereby, an advantage of increasing the amount of the recovered valuable metal can be obtained.

In this way, the redox degree of the molten product can be controlled by adding the wound body scrap as a reducing agent to the molten product obtained by heat-melting the sources, so that the redox degree can be controlled more accurately and efficiently, resulting in a higher recovery ratio of the valuable metal. In addition, as mentioned above, it is also possible to increase the amount of the recovered valuable metal.

(Control of Redox Degree with Reducing Agent or Oxidizing Agent)

In the melting step, first, at a stage of heat-melting the sources into a molten product, a reducing agent or an oxidizing agent is introduced into the sources to control the redox degree, subsequently the sources are molten into a molten product, and then the reducing agent or the oxidizing agent is further introduced into the molten product to control the final redox degree. Thereby, the redox degree can be precisely controlled to a desired value to improve the recovery ratio of the valuable metal.

Specifically, at the stage of heating the sources into a molten product, the reducing agent or the oxidizing agent can be introduced by any known method regardless of types of the reducing or oxidizing agents. For example, if the reducing or oxidizing agent is a solid substance, this agent should be fed into the sources or the molten product. If the reducing or oxidizing agent is a gaseous substance, this agent should be introduced form an inlet such as a lance placed in the melting furnace. As for the type of the reducing agent, a material with a high carbon grade (graphite powder, graphite grain, coal, coke, etc.) or carbon monoxide can be introduced. Also, a wound body scrap may be introduced as a reducing agent. As the oxidizing agent, an oxidizing gas (air, oxygen, etc.) or a material with a low carbon grade can be used.

Subsequently, at the stage after preparation of the molten product, the wound body scrap is introduced as the reducing agent. In other words, the wound body scrap is fed into the molten product. For example, as will be described in detail later, an oxygen partial pressure in the molten product is measured once the sources are molten into a molten product, and an amount of the reducing agent (wound body scrap) or the oxidizing agent to be introduced is adjusted based on the measurement result of the oxygen partial pressure, and then the agent is fed into the molten product. This makes it possible to precisely control the redox degree to the desired value, thereby improving the recovery ratio. Furthermore, since the wound body scrap is used as the reducing agent, carbon is easily introduced into the slag, and the valuable metal distributed in the slag can be recovered efficiently. Furthermore, copper (Cu), nickel (Ni), and cobalt (Co) contained in the wound body itself can also be recovered as a valuable material.

After the molten product was prepared, when a carbonaceous reducing agent such as graphite powder, graphite grain, coal, or coke is fed into the molten product to control the redox degree, the fed reducing agent is repelled from the slag and may ignite on the slag. In this case, the valuable metal are difficult to be recovered from the slag, thereby the amount of reducing agent introduced into the molten product is decreased, and it is difficult to sufficiently decrease the oxygen partial pressure.

(Control of Redox Degree Based on Oxygen Partial Pressure Measurement)

In the melting step, it is preferable to directly measure the oxygen partial pressure in the molten product using an oxygen analyzer and control the oxygen partial pressure based on the obtained measurement results. This makes it possible to more strictly control the redox degree of the molten product, so that the valuable metal and impurities can be precisely separated from each other.

As explanation of this point, if the redox degree (carbon content, oxidation number and amount of metal) of the sources can be precisely grasped in advance, it is possible, in principle, to control the redox degree of the obtained molten product simply by adjusting the blending amount of the sources during the source formulation. However, actually, the sources are not uniform, furthermore a sampling error also occurs during analysis of the sources, and this error makes it difficult to control the redox degree to a desired value. Although Patent Document 1 proposes a method for analyzing a gas on a melting bath, such a method is not highly reliable due to a large measurement error. In other words, the oxygen partial pressure inside the melting furnace where oxygen is being introduced is not equilibrium and is constantly fluctuating, and the fluctuation is increased depending on locations and times. Furthermore, if the atmospheric gas contains dust, the dust may adhere to a probe of a gas analyzer to prevent accurate measurement. Thus, it is difficult to accurately determine the redox degree (oxygen partial pressure) of the molten product in the method for analyzing a gas on a melting bath.

In contrast, an actual redox value of the molten product can be accurately reflected to a measured value by directly measuring the oxygen partial pressure of the molten product. Thus, for example, if the redox degree of the molten product deviates from a desired value, the oxygen partial pressure can be accurately controlled by introducing a reducing agent or an oxidizing agent, and thereby the redox degree of the molten product can be precisely matched with the desired value. As a result, even if elements having oxygen affinities close to each other, like phosphorus and cobalt, are contained in the molten product, these elements can be precisely separated from each other.

The method for directly measuring the oxygen partial pressure in the molten product is not particularly limited.

Examples of the method include a method using an oxygen analyzer disposed to an oxygen sensor (oxygen probe), in which measurement is performed by inserting the sensor into a molten product such that a tip of the oxygen sensor is immersed in the molten metal. As the oxygen sensor, any known sensor such as a zirconia solid electrolytic sensor may be used.

The oxygen partial pressure may be controlled by any known method. For example, a reducing or oxidizing agent may be introduced into sources to be molten or a molten product produced from the molten sources. In the method according to the present embodiment, a wound body scrap is used as the reducing agent. Also, together with the wound body scrap, a material with a high carbon grade (graphite powder, graphite grain, coal, coke, etc.) or carbon monoxide can be used. As the oxidizing agent, an oxidizing gas (air, oxygen, etc.) and a material with a low carbon grade can be used. Components with low carbon qualities in the sources can also be used as oxidizing agents.

Preferably, the oxygen partial pressure in the molten product is controlled to within a range of $10^{-14.0}$ atm or higher and $10^{-8.0}$ atm or lower. This range makes it possible to recover the valuable metal more efficiently. If the oxygen partial pressure is lower than $10^{-14.0}$ atm, phosphorus as an impurity may be reduced to contaminate the alloy due to an excessively strong reduction degree of the molten product. On the other hand, if the oxygen partial pressure is higher than $10^{-8.0}$ atm, cobalt as a valuable metal may be oxidized and incorporated into the slag. More preferably, the oxygen partial pressure is controlled to within a range of $10^{-14.0}$ atm or higher and $10^{-11.0}$ atm or lower.

(Heating Temperature)

The heating temperature for heat-melting the sources is not particularly limited, but preferably set to within a range of 1300°C or higher and 1500°C or lower. If the heating temperature is 1300°C or higher, the valuable metal (e.g. Cu, Co, Ni) is sufficiently molten to form a molten alloy with enhanced fluidity. Thereby, the alloy and the slag can be separated from each other in the slag separation step described below. More preferably, the heating temperature is 1350°C or higher. On the other hand, if the heating temperature is higher than 1500°C, thermal energy is wastefully consumed, refractories such as crucibles and furnace walls excessively wear, and therefore productivity may be lowered. More preferably, the heating temperature is 1450°C or lower.

(Introduction of Flux)

A flux may be introduced (added) to the sources in the heat-melting treatment. By addition of the flux, the melting temperature can be lowered, and, if phosphorus (P) is contained as an impurity element, the removal of phosphorus can be further enhanced. Preferably, the flux includes an element that incorporates impurity elements to form basic oxides having low melting points. For example, since phosphorus becomes an acidic oxide by oxidization, the more basic the slag formed by heat-melting becomes, the easier phosphorus can be removed by incorporating phosphorus into the slag. Above all, a flux containing an inexpensive calcium compound stable at room temperature is more preferable. Examples of the calcium compound include calcium oxide (CaO) and calcium carbonate ($CaCO_3$). Also, silicon dioxide ($SiO_2$) may be used as a flux.

[Slag Separation Step]

In the slag separation step, the slag is separated from the molten material obtained in the melting step to recover an alloy containing a valuable metal. The slag and alloy in the molten material have different specific gravities. Since the slag having a specific gravity lower than that of the alloy aggregates on top of the alloy in the molten material, the slag can be easily separated by gravity separation to recover the alloy.

A sulfurization step to sulfurize the obtained alloy or a crushing step to crush the obtained sulfide or alloy may be provided after the slag separation step. Furthermore, the valuable metal-containing alloy obtained through such a pyrometallurgical smelting process may be subjected to a wet smelting process. The wet smelting process makes it possible to remove impurity components contained in the alloy and separate and refine the valuable metal (e.g. Cu, Ni, Co) to recover each valuable metal. Examples of the treatment for the wet smelting process include known methods such as neutralization treatment and solvent extraction treatment.

The method according to the present embodiment described above makes it possible to precisely control the redox degree in the heat-melting treatment, to suppress incorporation of impurity elements into the alloy, and to recover a valuable metal at a higher recovery ratio.

For example, when the sources to be treated contain phosphorus (P), the phosphorus content (phosphorus grade in metal) in the obtained alloy can be 0.50% by mass or less, 0.10% by mass or less, 0.05% by mass or less, 0.03% by mass or less, or 0.01% by mass or less. When the sources contain cobalt (Co) as a valuable metal, a recovery ratio of cobalt (Co) can be 90.0% by mass or higher, 95.0% by mass or higher, 96.0% by mass or higher, or 97.0% by mass or higher. The cobalt (Co) recovery ratio is calculated from the cobalt (Co) content in the final alloy and slag according to the following equation (1).
[Equation 1]

$$\text{Co recovery ratio (\% by mass)} = \frac{\text{Co content in alloy}}{\text{Co content in alloy} + \text{Co content in slag}} \times 100$$

$$\cdots (1)$$

As mentioned above, the sources to be treated in the recovery method according to the present embodiment are not particularly limited as long as the sources contain valuable metals, but the sources preferably include discarded lithium ion batteries. The discarded lithium ion batteries contain lithium (Li) and valuable metals (Cu, Ni, Co), as well as low added-value metals (Al, Fe) and carbon components. Thus, valuable metals can be efficiently separated and recovered by applying the recovery method to sources containing discarded lithium ion batteries.

The discarded lithium ion batteries are conceptually includes not only used lithium ion batteries but also wastes generated in a manufacture process for lithium ion batteries, such as defective products detected in the manufacture process for positive electrode materials and the like constituting a battery, residues in the manufacture process, and debris generated in the manufacture process. Thus, the discarded lithium ion batteries can also be called lithium ion battery wastes.

<<2. Method for Recovering Valuable Metal from Discarded Lithium Ion Battery>>

FIG. 1 is a process diagram illustrating an example of a flow of a method for recovering valuable metals from discarded lithium ion batteries. As illustrated in FIG. 1, the method includes: removing an electrolytic solution and an outer can from a discarded lithium ion battery to obtain discarded battery contents (discarded battery pretreatment step S1); crushing the discarded battery contents into a crushed material (crushing step S2); oxidative-roasting the crushed material into an oxidative-roasted material (oxidative-roasting step S3); melting the oxidatively-roasted material into a molten material (melting step S4); and separating a slag from the molten material to recover an alloy (slag separation step S5).

Although not illustrated in the figure, a sulfurization step to sulfurize the obtained alloy and a crushing step to crush the obtained sulfide or alloy may be provided after the slag separation step S5.

[Discarded Battery Pretreatment Step]

The purpose of the discarded battery pretreatment step S1 is to prevent discarded lithium ion batteries from exploding and to detoxify the batteries. Since the lithium ion batteries are a sealed system, the batteries contain an electrolytic solution or the like. Thus, it is dangerous to crush the battery as it is, due to a possibility of explosion. It is preferable to discharge the battery and remove the electrolytic solution by some method. In this way, the treatment with high safety can be performed by removing the electrolytic solution in the discarded battery pretreatment step S1.

The specific method for pretreating the discarded battery is not particularly limited. As the method, for example, the discarded battery is physically opened with a needle-like cutting edge to remove the electrolytic solution. As another method, the discarded battery is heated to incinerate the electrolytic solution so that the battery is detoxified.

[Crushing Step]

In the crushing step S2, the contents of the discarded lithium ion battery are crushed to obtain a crushed material. The purpose of the crushing step S2 is to increase the reaction efficiency in the pyrometallurgical smelting process. By increasing the reaction efficiency, the recovery ratio of valuable metals (Cu, Ni, Co) can be increased. Specific crushing methods are not particularly limited. The contents of the battery can be crushed using a conventionally known crusher such as a cutter mixer.

Aluminum (Al) and iron (Fe), which are metals constituting the outer can, can be easily physically sorted by an aluminum sorter using an eddy current, a magnetic sorter, or the like. In addition, a shaking sieve machine or the like can be used to obtain a foil-like negative electrode current collector (copper foil, etc.) or positive electrode current collector (aluminum foil, etc.) (hereinafter referred to as "foil-like material") as a plus sieve, and a powdery negative electrode active material (graphite, etc.) or positive electrode active material (lithium nickelate, lithium cobaltate, etc.) (hereinafter referred to as "powdery material") as a minus sieve.

The discarded battery pretreatment step and the crushing step together correspond to the preparation step described above.

[Oxidative Roasting Step]

In the oxidative roasting step (preheating step) S3, the crushed material obtained in the crushing step S2 is oxidative-roasted (preheated) to obtain an oxidative-roasted material. The details of this step are as described above. The crushed material is preheated in the oxidative-roasting step S3, so that, even if the sources to be subjected to the melting step S4 contains excessive carbon, carbon can be effectively oxidized and removed, and alloying and integration of valuable metals can be enhanced in the heat-melting treatment.

[Melting Step]

In the melting step S4, the oxidative-roasted material obtained in the oxidative roasting step S3 is heat-molten to obtain a molten material including an alloy and a slag. The details of this step are as described above.

In particular, in the method according to the present embodiment, the sources are heat-molten into a molten product, then, as a reducing agent, a scrap of a wound body, the wound body being an electrode assembly wound in a state where its positive and negative electrodes are insulated from each other by a separator and having a negative electrode formed of carbon, is fed into the molten product to adjust a redox degree. Since the wound body scrap is carbon wound with a sheet, carbon is less likely to come into contact with air, and since the scrap has a specific gravity higher than that of carbon alone, the scrap can also easily penetrate into the slag constituting the molten product, and therefore a reduction efficiency can be improved. Furthermore, copper (Cu), nickel (Ni), and cobalt (Co), which constitute the positive electrode and the like of the wound body, can also be recovered as valuable metals. Thereby, an advantage of increasing the amount of the recovered valuable metals can be obtained.

As described above, the redox degree of the molten product can be controlled more precisely and efficiently by using the wound body scrap as a reducing agent, thus enabling the recovery of valuable metals at a high recovery ratio.

<Slag Separation Step>

In the slag separation step S5, the slag is separated from the molten material obtained in the melting step S4 to recover the alloy. The details of this step are as described above.

After the slag separation step S5, a sulfurization step or a crushing step may be provided. Furthermore, the obtained valuable metal alloy may be subjected to a hydrometallurgical process. The details of the sulfurization step, the crushing step, and the hydrometallurgical process are as described above.

EXAMPLES

The present invention will be more specifically explained below with reference to Examples, but the present invention is not limited to the following Examples at all.

[Example 1]

(1) Recovery of Valuable Metal

As sources, discarded lithium ion batteries were used to recover valuable metals. The recovery was performed according to the following steps.

(Discarded Battery Pretreatment Step and Crushing Step (Preparation Step))

Used batteries and defective batteries detected in the battery manufacturing process were prepared as the discarded lithium ion batteries which are sources to be treated. Subsequently, the discarded lithium ion batteries were immersed together in salt water and electrically discharged, then moisture was removed, and the batteries were roasted at 260°C in the atmosphere to decompose and remove the electrolytic solution and the outer can to obtain battery contents.

The obtained battery contents were crushed by a crusher (product name: Good Cutter, manufactured by UJIIE MANUFACTURING CO., LTD) to obtain a crushed material.

(Oxidative Roasting Step)

The obtained crushed material was fed into a rotary kiln and oxidative-roasted in the atmosphere at 800°C for 180 minutes to obtain an oxidative-roasted material. This oxidative-roasted material was used as a source to be charged into a melting furnace for the heat-melting treatment in the subsequent melting step.

(Melting Step)

Calcium oxide (CaO) and silicon dioxide (SiO$_2$) were added as fluxes to 6720 g of oxidative-roasted material (source for the heat-melting treatment), to which a reducing agent was further added to adjust a redox degree, and these materials were mixed. The resulting mixture was charged into a melting furnace equipped with an alumina crucible, and the mixture was heat-molten to prepare a molten product. Then a molten material containing an alloy and a slag was obtained. In this step, a graphite powder was used as a reducing agent, and an amount of the reducing agent was adjusted to 1.1 time the amount (equivalent) required for reducing all valuable metals contained in the source. Furthermore, the mixture was heated (molten) at 1400°C for 30 minutes, and then a slag was sampled to confirm a cobalt (Co) grade.

In the heat-melting treatment, an oxygen partial pressure in the molten product was directly measured using an oxygen analyzer. Specifically, an oxygen analyzer with a tip equipped with an oxygen probe (OXT-O, manufactured by Kawaso Electric Industry Co., Ltd.) was used, and the probe was inserted into the molten metal such that the tip of the oxygen probe was directly immersed in the molten product. This oxygen probe was equipped with a zirconia solid electrolytic sensor. After the oxygen partial pressure value was confirmed to settle, the measurement value was read.

Subsequently, 120 g of wound body scrap containing 30 g of carbon was fed to the molten product, which was further maintained at 1400°C for 30 minutes to control the redox degree. After feeding the wound body scrap, the oxygen partial pressure was 10$^{-12.8}$ atm.

(Slag Separation Step)

The slag was separated from the obtained molten material by using a difference in specific gravity to recover the alloy.

(2) Evaluation

The recovered alloy (metal) and slag were subjected to elemental analysis using an inductively coupled plasma (ICP) analyzer (Agilent 5100 SUDV, manufactured by Agilent Technologies, Inc). In this analysis, cobalt (Co) that is the easiest to oxidize and difficult to recover as a metal, and phosphorus (P) that is an impurity element difficult to remove from the metal were evaluated as analysis elements.

A phosphorus (P) content (% by mass) in the alloy (metal) was defined as a phosphorus grade. The recovery ratio of cobalt (Co) was determined as follows. In other words, the cobalt (Co) recovery ratio was calculated using the cobalt (Co) content in the alloy and slag determined by elemental analysis according to the following formula (1).

[Equation 2]

$$\text{Co recovery ratio (\% by mass)} = \frac{\text{Co content in alloy}}{\text{Co content in alloy} + \text{Co content in slag}} \times 100$$

$$\cdots (1)$$

[Example 2]

The process was the same as in Example 1 except that 7020 g of oxidative-roasted material (source for the heat-melting treatment) was heat-molten to prepare a molten product, to which 120 g of wound body scrap having a carbon content of 36 g was fed to control a redox degree.

[Comparative Example 1]

The process was the same as in Example 1 except that 6720 g of oxidatively-roasted material (source for the heat-melting treatment) was heat-molten to prepare a molten product, to which 30 g of graphite powder having a carbon content of 30 g was fed to control a redox degree.

[Comparative Example 2]

The process was the same as in Example 1 except that 7020 g of oxidative-roasted material (source for the heat-melting treatment) was heat-molten to prepare a molten product, to which 36 g of graphite powder having a carbon content of 36 g was fed to control a redox degree.

(3) Results

Table 1 below presents results of measuring the phosphorus grade in the alloy, the cobalt recovery ratio, and the oxygen partial pressure in the molten product to which the reducing agent had been added, in Examples 1 and 2, and Comparative Examples 1 and 2.

In Examples 1 and 2, the cobalt recovery ratio as a valuable metal was 95% or higher, and the phosphorus grade in the obtained alloy was lower than 0.01% by mass, as presented in Table 1. The oxygen partial pressure in the molten product was $10^{-12.8}$ atm in Example 1 and $10^{-11.6}$ atm in Example 2. In Example 1, the cobalt grade in the slag decreased by 1.15% by mass from 1.4% by mass to 0.25% by mass. In Example 2, the cobalt grade in the slag decreased by 0.99% by mass from 1.5% by mass to 0.51% by mass.

In this way, cobalt as a valuable metal could be recovered at a high recovery ratio in Examples 1 and 2. The reduction reaction of cobalt in the slag could be sufficiently advanced by using the wound body scrap as a reducing agent to control the final redox degree. In other words, a valuable metal could also be efficiently recovered from the slag.

In contrast, in Comparative Examples 1 and 2, the recovery ratio of cobalt as a valuable metal was 89% or higher, and the phosphorus grade in the obtained alloy was lower than 0.01% by mass. The oxygen partial pressure in the molten product was $10^{-8.9}$ atm in Comparative Example 1 and $10^{-8.8}$ atm in Comparative Example 2. In Comparative Example 1, the cobalt grade in the slag decreased by 0.1% by mass from 1.4% by mass to 1.3% by mass. In Comparative Example 2, the cobalt grade in the slag decreased by 0.3% by mass from 1.5% by mass to 1.2% by mass.

As described above, in Comparative Examples 1 and 2, the final redox degree was controlled by using the graphite powder as the reducing agent, but a wettability between the graphite powder and the slag was poor, and the graphite powder floated on the slag and ignited. Thus, the reduction reaction of cobalt contained in the slag could not be sufficiently performed. In other words, a valuable metal could not be efficiently recovered from the slag. Furthermore, the graphite powder could not sufficiently contribute to the reduction reaction in the molten product due to ignition of the graphite powder. Consequently, although phosphorus was separated and removed without any problem, the recovery ratio of cobalt as a valuable metal decreased compared to Examples 1 and 2.

[Table 1]

| | Amount of discarded lithium ion battery (LIB) (Amount for melting treatment) | Reducing agent | | | Co grade in slag | | Oxygen partial pressure in molten metal | Phosphoru s grade in metal | Co recovery ratio |
|---|---|---|---|---|---|---|---|---|---|
| | | Type | Feeding amount | C content | Before additional feeding of reducing agent | After additional feeding of reducing agent | | | |
| | g | | g | g | % by mass | % by mass | atm | % by mass | % |
| Example 1 | 6720 | Wound body | 120 | 30 | 1.4 | 0.25 | $10^{-12.8}$ | <0.01 | 96.5 |
| Example 2 | 7020 | Wound body | 120 | 36 | 1.5 | 0.51 | $10^{-11.6}$ | <0.01 | 95.1 |
| Comparative Example 1 | 6720 | Graphite powder | 30 | 30 | 1.4 | 1.3 | $10^{-8.9}$ | <0.01 | 89.9 |
| Comparative Example 2 | 7020 | Graphite powder | 36 | 36 | 1.5 | 1.2 | $10^{-8.8}$ | <0.01 | 89.6 |

EP 4 394 061 A1

**Claims**

1. A method for recovering a valuable metal from sources containing the valuable metal, comprising:

   a step of preparing the source;
   a step of melting the sources by charging the sources into a melting furnace and heating the sources to obtain an alloy and a slag; and
   a step of separating the slag to recover the alloy containing the valuable metal,
   the melting step comprising adjusting a redox degree by feeding, as a reducing agent, a scrap of a wound body, the wound body being an electrode assembly wound in a state where its positive and negative electrodes are insulated from each other by a separator and having a negative electrode formed of carbon.

2. The method according to claim 1, wherein the melting step comprises adjusting the redox degree by feeding, as the reducing agent, the scrap of a wound body into a molten product produced after melting the sources by heating.

3. The method according to claim 1 or 2, wherein the melting step comprises adding a flux to the sources when the sources are molten by heating.

4. The method according to any one of claims 1 to 3, wherein the melting step comprises controlling an oxygen partial pressure in the molten product to within a range of $10^{-14}$ atm or higher and $10^{-11}$ atm or lower.

5. The method according to any one of claims 1 to 4, further comprising a step of oxidatively-roasting the sources, and subjecting an oxidatively-roasted material obtained through the oxidative roasting step to the melting step.

6. The method according to any one of claims 1 to 5, wherein the valuable metal comprises at least one metal or alloy selected from a group consisting of copper (Cu), nickel (Ni), cobalt (Co), and combinations thereof.

7. The method according to any one of claims 1 to 6, wherein the sources comprise discarded lithium ion batteries.

DISCARDED LITHIUM ION BATTERY

DISCARDED BATTERY
PRETREATMENT STEP — S1

CRUSHING STEP — S2

OXIDATIVE-ROASTING
STEP — S3

MELTING STEP — S4

SLAG SEPARATION STEP — S5

SLAG          ALLOY

## INTERNATIONAL SEARCH REPORT

| International application No. |
|---|
| **PCT/JP2022/029322** |

### A. CLASSIFICATION OF SUBJECT MATTER

*C22B 5/02*(2006.01)i; *C22B 1/02*(2006.01)i; *C22B 7/00*(2006.01)i; *C22B 15/00*(2006.01)i; *C22B 23/02*(2006.01)i
FI:   C22B5/02; C22B1/02; C22B15/00; C22B23/02; C22B7/00 C; C22B7/00 F; C22B7/00 E

According to International Patent Classification (IPC) or to both national classification and IPC

### B. FIELDS SEARCHED

Minimum documentation searched (classification system followed by classification symbols)

C22B5/02; C22B1/02; C22B7/00; C22B15/00; C22B23/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2017-509786 A (UMICORE) 06 April 2017 (2017-04-06) claims, paragraphs [0013]-[0022], [0027]-[0031] | 1-3, 5-7 |
| A | | 4 |
| Y | JP 2011-119092 A (TOYOTA MOTOR CORP.) 16 June 2011 (2011-06-16) paragraphs [0067]-[0069], fig. 1 | 1-7 |
| Y | JP 2021-66903 A (SUMITOMO METAL MINING CO., LTD.) 30 April 2021 (2021-04-30) claims 1-2, paragraphs [0009], [0028], [0029] | 5-7 |
| Y | JP 8-218128 A (NIKKO KINZOKU KK) 27 August 1996 (1996-08-27) claim 1, paragraphs [0001], [0009] | 5-7 |
| Y | JP 2017-526820 A (UMICORE) 14 September 2017 (2017-09-14) claims, paragraphs [0002]-[0004], [0012]-[0018], [0022]-[0029] | 1-7 |
| Y | JP 2013-91826 A (SUMITOMO METAL MINING CO., LTD.) 16 May 2013 (2013-05-16) claims 1, 6, paragraphs [0025]-[0034], fig. 1 | 5-7 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 October 2022** | **18 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/029322**

| Patent document<br>cited in search report | | | Publication date<br>(day/month/year) | Patent family member(s) | | | Publication date<br>(day/month/year) |
|---|---|---|---|---|---|---|---|
| JP | 2017-509786 | A | 06 April 2017 | US | 2017/0005374 | A1 | |
| | | | | claims, paragraphs [0012]-<br>[0020], [0024]-[0026] | | | |
| | | | | WO | 2015/096945 | A1 | |
| | | | | KR | 10-2016-0102493 | A | |
| | | | | CN | 105849290 | A | |
| JP | 2011-119092 | A | 16 June 2011 | US | 2012/0282525 | A1 | |
| | | | | paragraphs [0081]-[0083], fig.<br>1 | | | |
| | | | | WO | 2011/067982 | A1 | |
| | | | | CN | 102612772 | A | |
| | | | | KR | 10-2012-0099108 | A | |
| JP | 2021-66903 | A | 30 April 2021 | (Family: none) | | | |
| JP | 8-218128 | A | 27 August 1996 | (Family: none) | | | |
| JP | 2017-526820 | A | 14 September 2017 | US | 2017/0229744 | A1 | |
| | | | | claims, paragraphs [0002]-<br>[0004], [0010]-[0016], [0020]-<br>[0026] | | | |
| | | | | WO | 2016/023778 | A1 | |
| | | | | KR | 10-2017-0041899 | A | |
| | | | | CN | 106795579 | A | |
| JP | 2013-91826 | A | 16 May 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5818798 B

- JP 5853585 B